Europäisches Patentamt

(19) European Patent Office

Office européen des brevets

(11) Publication number: **0 210 959**
**A1**

(12) # EUROPEAN PATENT APPLICATION

(21) Application number: 86830178.9

(22) Date of filing: 24.06.86

(51) Int. Cl.⁴: **F 16 K 11/085**

(30) Priority: 23.07.85 IT 4839485

(43) Date of publication of application:
04.02.87 Bulletin 87/6

(84) Designated Contracting States:
AT BE CH DE FR GB LI LU NL SE

(71) Applicant: Bonardi, Giovanni
Via Atteone 141
I-00133 Rome(IT)

(72) Inventor: Bonardi, Giovanni
Via Atteone 141
I-00133 Rome(IT)

(74) Representative: de Simone, Domenico et al,
Ing. Barzanò & Zanardo Roma S.p.A. Via Piemonte 26
I-00187 Roma(IT)

(54) A fluid stream cock.

(57) A fluid stream cock comprising a cylindrical pipe member
(2) whose lower end is prearranged for its connection with the
main duct (1) of the fluid stream, said member (2) also having
two holes that communicate with deflecting ducts (3, 4) of said
main duct, a four-position valve being inserted inside said
cylindrical member (2), which valve is made up of a stationary
outer member (5) having a pair of holes (6, 7) corresponding
to said two holes of the pipe member, as well as of an inner
rotatable member (8) having, on its side surface, a slit (10)
whose free opening is of such a size as to overlap simultaneously the inside part of said pair of holes (6, 7) of said
outer member, and, at a position opposite to said slit (10), a
seat (11) for housing a gasket (12) of such sizes as to make a
seal simultaneously on said pair of holes (6, 7), and, at a posi-
tion corresponding to the upper edge, a seat housing a further
gasket (14) to realize a seal in the vertical direction.

FIG.1

The present invention relates to a fluid stream cock. More particularly, the present invention relates to a fluid stream cock provided with one only four-position valve, said deflector being suitable, because of its universal type features, for any type of industrial, heating, hydraulic-sanitary plant, and so on.

The fluid cocks commercially available at the present time are of the modular and of the non-modular type, in which the deflection of the fluid stream from the main duct to the minor branches is obtained by means of two two-position valves arranged in each one of said branches.

It is evident that such a type of fluid cock is quite complex from the mechanical viewpoint, and that it is of very large overall dimensions and has a high tendency to wear out.

Moreover, just as a result of their mechanical complexity, such cocks show fluid passage paths from the main duct to the single minor branches of quite tortuous shapes so that remarkable pressure drops are experienced by the fluid stream in such devices.

Accordingly, it is an object of the present invention to supply a fluid stream cock of cylindrical shape suitable to fit any type of pipe of any shape, for instance of circular, square, rectangular, hexagonal shape etc., such deflector showing a single four-position valve allowing the fluid stream to pass towards one of the deflector branches or toward both of them, or preventing the fluid simultaneously from passing.

A further object of the present invention is that of providing a fluid cock allowing the fluid to pass from the main duct to the minor branches with no high pressure drops through substantially direct path.

A further object of the present invention is to provide a fluid cock that warrants an optimal seal because of the fact that the valve gaskets are never in direct contact with the fluid.

Moreover, a further object of the present invention is to supply a fluid cock that, by means of the prearrangement in the pipe of suitable connection seats, can be provided in such a number as to satisfy any kind of need to realize a single, compact deflection case or box, for instance in a bathroom.

Accordingly, it is a specific object of the present invention a fluid stream cock comprising a cylindrical pipe member whose lower end is prearranged for connection with the main duct of the fluid and having two holes communicating with the deflection ducts of the main duct, a four-position valve inserted inside said member, which valve is made up of a stationary outer member having a pair of holes corresponding to said two holes of the pipe member, as well as of an inner rotatable member having, on its side surface, a slit whose free opening is of such a size as to overlap simultaneously the inside part of said pair of holes of said outer member and, at a position opposite to said slit, a seat for housing a gasket whose sizes are such as to make simultaneously a seal on said pair of holes, and, at a point corresponding to the upper edge, a seat housing a further gasket to realize a seal in the vertical direction.

More particularly, according to the present invention, said gaskets are of the 0-ring or of the oval type.

Again according to the present invention, said fluid stream cock is laterally or superiorly connected to said main duct of the fluid.

According to a preferred embodiment of the fluid deflector of the present invention, said two holes in the cylindrical pipe member, and therefore the pair of holes in the stationary outer member of the valve, are arranged at 90° to each other.

Moreover, the deflection ducts communicating with said holes can be provided at a position from that at right angles to that parallel to the main duct of the fluid stream.

Again according to the present invention, the connection between the cylindrical pipe member and the main duct of the fluid stream can be realized by welding or by screwing.

It is clearly evident that said cylindrical pipe member can be direct obtained by casting as an integral piece with the main duct of the fluid, the length of said piece being provided with a threaded part or with similar means for connecting the same with the other length of the duct of the fluid stream.

According to a particularly preferred embodiment of the fluid stream cock of the present invention, said cock is assembled by introducing more than one of such cocks into a single length of said main feeding duct, in which the suitable seats are previously arranged for the connection.

More particularly, the main feeding duct can be of any type commercially available at the present time both as regards it outer section and as regards the material it is made up of.

The present invention will be disclosed in the following according to some of its preferred embodiments illustrated in the Figures of the enclosed drawings wherein:

Figure 1 shows an exploded view of the fluid stream cock according to the present invention;

Figure 2 is a cross section along the line A-A of Figure 1; and

Figures 3, 4, 5 and 6 show as a partial cross section plan view the fluid cock according to the invention, the four positions of the valve being pointed out.

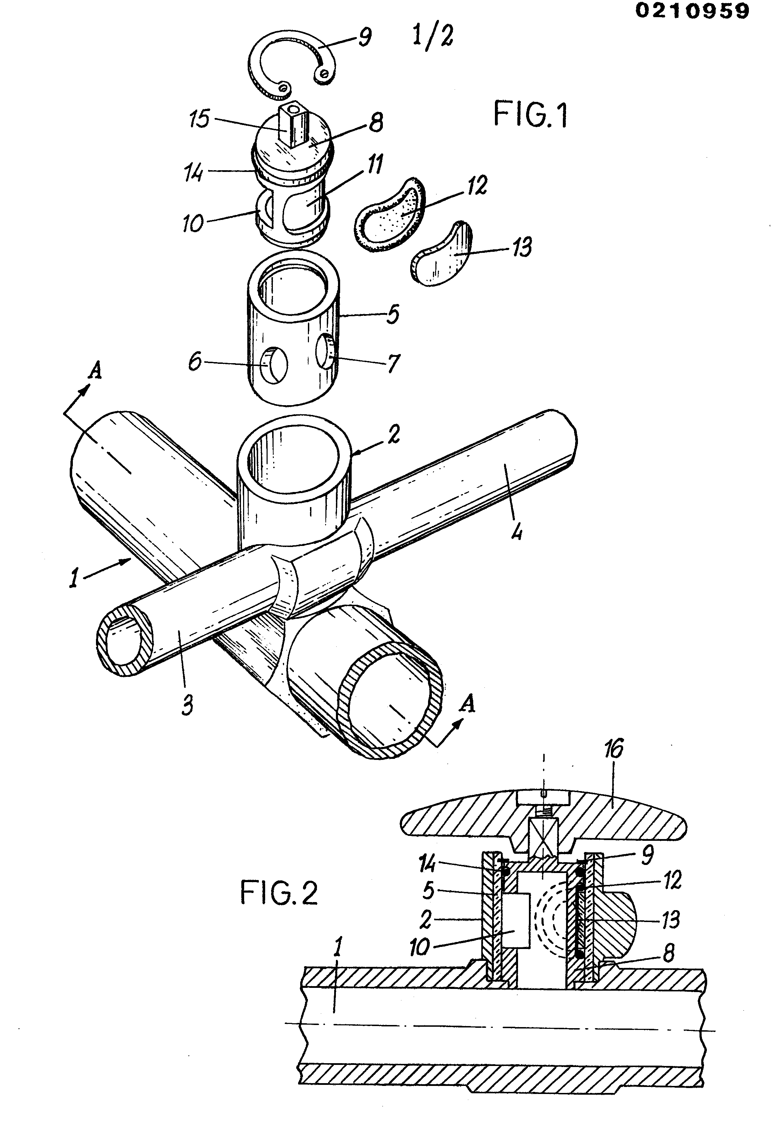

In Figure 1, the cylindrical pipe 2 is shown as assembled on the main duct 1, from which pipe 2 the two minor ducts 3 and 4 branch off.

The outer member 5 is inserted inside said cylindrical pipe 2, said outer member being provided with holes 6 and 7 corresponding to the holes (not shown) inside the pipe 2 and corresponding to the ducts 3 and 4.

The rotatable member 8 of the four-position valve of the fluid stream cock according to the present invention is inserted inside the member 5 and is locked in the vertical direction by a small locking clip or clamp 9.

A slit 10 is provided on said member 8, the free opening of said slit being of such a size as to overlap simultaneously the two holes 6 and 7 of said member 5.

A seat 11 is also provided on the side surface of said member 8, at a position opposite the position of said slit 10, such seat being designed for housing the gasket 12 that is held in position also through the member 13.

A gasket 14 of the O-ring type is arranged at a position corresponding to the upper edge of the member 8, said gasket being designed to realize a seal in the vertical direction.

A small pin 15 is provided on the top of said member 8 to obtain the connection with the opening knob 16 (see Figure 2).

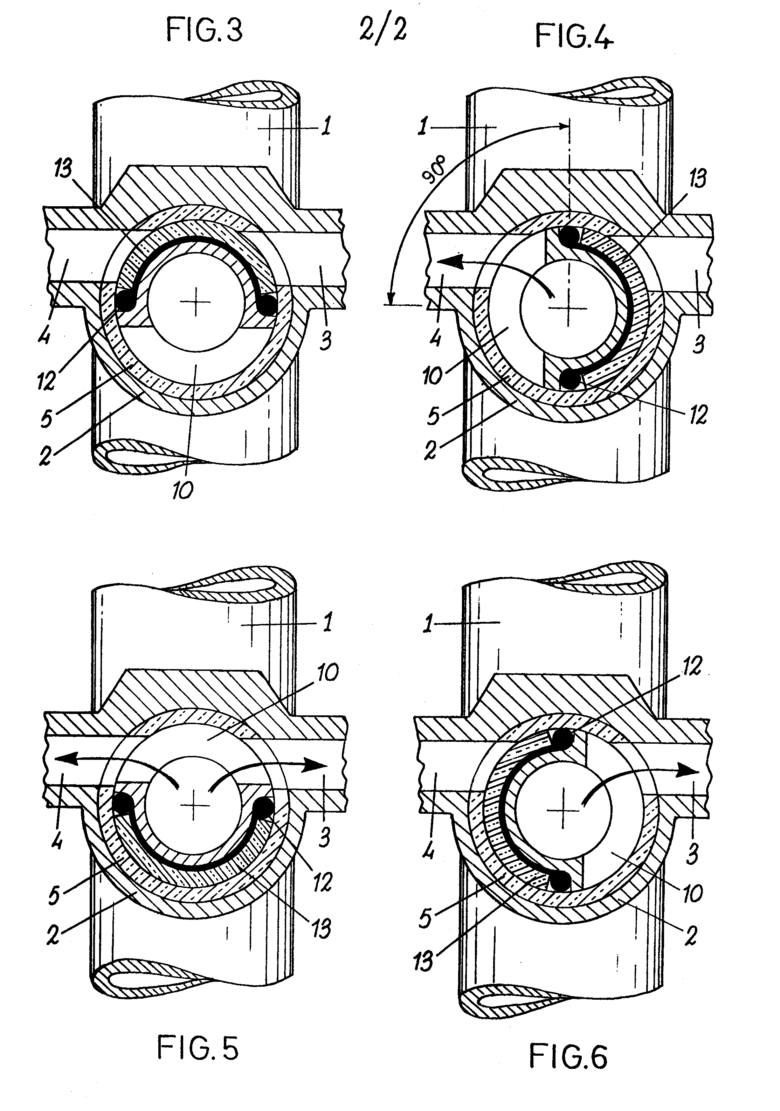

Taking now in consideration said Figures 3, 4, 5 and 6, it can be seen that a mere rotation through 270° of the member 8 allows all four positions to be obtained which are required for the right working of the fluid stream cock according to the present invention.

Indeed, starting from the position shown in Figure 3, in which both ducts 3 and 4 are closed, the feeding of the fluid stream is obtained from the main duct 1 to the minor duct 4 by a 90° rotation, and the simultaneous opening is obtained of the two ducts 3 and 4 by a further 90° rotation, as the two holes 6 and 7 of Figure 1 are in correspondence with said slit 10.

A further 90° rotation allows the fluid stream to pass through the duct 3 only.

Similar rotations in the reversed sense allow the prior conditions to be reestablished.

The present invention has been disclosed according to some of its preferred embodiments, but it is to be understood that modifications and changes can be introduced in the same by those who are skilled in the art without departing from the spirit and scope of the invention for which a priority right is claimed.

0210959

CLAIMS:

1. A fluid stream cock characterized in that it comprises a cylindrical pipe member whose lower end is prearranged for the connection with the main duct of the fluid stream, said cylindrical pipe member also having two holes communicating with the deflection ducts of said main duct, a four-position valve inserted inside said member, which valve is made up of a stationary outer member having a pair of holes corresponding to said two holes of the pipe member, as well as of an inner rotatable member having on its side surface a slit whose free opening is of such a size as to overlap simultaneously the inside part of said pair of holes of said outer member and, at a position opposite said slit, a seat for housing a gasket of such sizes as to make a seal simultaneously on said pair of holes, and, at a point corresponding to the upper edge, a seat designed to house a further gasket to obtain a seal in the vertical direction.

2. A fluid stream cock according to claim 1 in which said gaskets are of the O-ring type or of the oval ring type.

3. A fluid stream cock according to claim 1, in which said two holes of the cylindrical type member are arranged at 90° apart.

4. A fluid stream cock according to claim 1, characterized in that it is connected at its top part or at its side part to said main duct for the fluid stream.

5. A fluid stream cock according to claim 1, in which said deflection ducts communicating with said two holes are at a position from that at right angles to that parallel to the main duct of the fluid stream.

0210959

6. A fluid stream cock according to claim 1, in which the connection between the cylindrical pipe member and the main duct of the fluid is obtained through welding.

7. A fluid stream cock according to claim 1, in which said cylindrical pipe member is an integral piece with a length of the main duct, said length of the main duct being provided with a connection means for connecting the same with the fluid stream duct.

8. A fluid stream cock according to claim 1, in which the connection between the cylindrical pipe member and the main duct of the fluid is obtained by screwing.

9. A fluid stream deflector according to claim 1, characterized in that more than one of such cocks are provided in a single length of the main feeding duct in which suitable seats are provided for realizing the connection.

10. A fluid stream cock according to claim 9 in which said type of main feeding duct is realized with an iron material or with a non-iron material.

FIG.1

FIG.2

0210959

FIG.3    2/2    FIG.4

FIG.5    FIG.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| Y | FR-A-2 276 523 (DEFONTAINE)<br>* Page 2, line 4 - page 3, line 11; page 4, lines 4-14; figures. * | 1 | F 16 K 11/085 |
| A | | 4,8,10 | |
| Y | US-A-3 916 950 (MONGERSON)<br>* Column 2, lines 57-62; figure 1 * | 1 | |
| A | US-A-3 938 553 (ORTEGA)<br><br>* Column 2, line 28 - column 3, line 44; figures * | 1,2,4, 10 | |
| A | FR-A-2 482 238 (CRISS)<br>* Page 3, line 35 - page 5, line 15; figures * | 1-5,10 | TECHNICAL FIELDS SEARCHED (Int. Cl.4)<br><br>F 16 K |
| A | US-A-2 685 259 (LONGENECKER)<br><br>* Column 5, lines 61-68; column 7, lines 15-43; figures 6,9 * | 1,3,4, 10 | |
| A | US-A-3 570 537 (KELLY)<br><br>* Figures 1-4 * | 1,7,8, 10 | |

---                       -/-

The present search report has been drawn up for all claims

| Place of search | Date of completion of the search | Examiner |
|---|---|---|
| THE HAGUE | 21-10-1986 | LEMERCIER D.L.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82

## European Patent Office

## EUROPEAN SEARCH REPORT

| DOCUMENTS CONSIDERED TO BE RELEVANT | | Page 2 | |
|---|---|---|---|
| Category | Citation of document with indication, where appropriate, of relevant passages | Relevant to claim | CLASSIFICATION OF THE APPLICATION (Int. Cl.4) |
| A | US-A-3 566 917 (WHITE)<br>* Figures * | 8,10 | |
| | ----- | | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 21-10-1986 | LEMERCIER D.L.L. |